# EUROPÄISCHE PATENTSCHRIFT

(11) **EP 4 278 880 B1**
(45) Veröffentlichungstag und Bekanntmachung des Hinweises auf die Patenterteilung: **06.05.2026**
(21) Anmeldenummer: 23161028.8
(22) Anmeldetag: 09.03.2023
(51) Int. Cl.: A01D 34/00, G05D 1/00

(54) **BODENBEARBEITUNGSROBOTER-SYSTEM UND VERFAHREN ZUR RÜCKFÜHRUNG EINES AUTONOM FAHRENDEN BODENBEARBEITUNGSROBOTERS**
SOIL CULTIVATING ROBOT SYSTEM AND METHOD FOR RETURNING AN AUTONOMOUSLY DRIVING SOIL CULTIVATING ROBOT
SYSTÈME DE ROBOT DE TRAVAIL DU SOL ET PROCÉDÉ DE RETOUR D'UN ROBOT DE TRAVAIL DU SOL À CONDUITE AUTONOME

(30) Priorität: 25.04.2022 DE 102022109922
(43) Veröffentlichungstag der Anmeldung: 22.11.2023
(60) Teilanmeldung: 24160535.1
(73) Patentinhaber: AL-KO Geräte GmbH, 89359 Kötz (DE)
(72) Erfinder: Volk, Martin, 89291 Holzheim (DE); Müller, Peter, 86159 Augsburg (DE); Leissenberger, Wolfgang, 8742 Obdach (AT); Kränzle, Bernhard, 89423 Peterswörth (DE)
(74) Vertreter: Dr. Binder & Binder GbR

(56) Entgegenhaltungen:
- WO-A1-2022/080596
- DE-T2- 69 829 411
- DE-U1- 202014 001 198
- IT-A1- 202000 003 107
- US-A1- 2013 211 647
- US-B2- 9 903 947

## Beschreibung

Die Erfindung betrifft allgemein ein Bodenbearbeitungsroboter-System mit einem stromleitenden Schleifendraht, welcher zur Begrenzung einer zu bearbeitenden Fläche und zur Rückführung des Roboters dient, und einem autonom fahrenden Bodenbearbeitungsroboter zur Bearbeitung der vom Schleifendraht umgrenzten Fläche. Insbesondere kann die Erfindung als Mähroboter-System ausgestaltet sein.

Bodenbearbeitungs- oder Mährobotersysteme, die eine durch einen Schleifendraht begrenzte Fläche nach mehr oder weniger zufälliger Fahrtrichtung ohne extern gestütztes Navigationssystem bearbeiten und dabei die Grenzen der zu bearbeitenden Fläche durch Detektion des Schleifendrahtes, genauer gesagt durch Detektion eines durch den Schleifendraht erzeugten kontinuierlichen oder wechselnden magnetischen Feldes, erkennen, sind allgemein bekannt. Der Schleifendraht dient dabei in der Regel auch dazu, den Roboter von einer beliebigen Stelle am Schleifendraht entlang zu einer Basisstation zurückzuführen. Da solche Roboter in der Regel durch Elektromotore angetrieben werden, kann dort eine Aufladung des Energiespeichers des Roboters erfolgen. Außerdem kann der Roboter, gegebenenfalls geschützt durch die Basisstation, geparkt werden.

Die hier beschriebene Erfindung betrifft also Bodenbearbeitungsroboter, insbesondere Mähroboter, die eine zu bearbeitende Fläche befahren, die durch ein Schleifenkabel randseitig begrenzt ist, wobei der Roboter ausschließlich nach dem Zufallsprinzip und ohne ergänzende Lokalisationstechnologie, wie Funktriangulation, Satellitennavigation oder Trägheitsnavigation gesteuert wird.

Problematisch ist bei solchen Systemen, dass der Roboter bei jeder Rückführung auf dem identischen Weg entlanggeführt wird und meist diesen Weg auch gleichzeitig bearbeitet. Auf diese Weise entsteht eine ausgeprägte Spur entlang des Schleifendrahtes, die sich vom Rest der bearbeiteten Fläche ungewünscht unterscheidet. Weiterhin führt diese Art der Rückführung dazu, dass der Roboter zufällig auch relativ lange Wege zurücklegt, wenn er an einem ungünstigen Einstiegspunkt den Schleifendraht gefunden hat. Hierdurch wird es notwendig, bei noch relativ großem Reservevorrat an Energie die Rückführung zur Basis zum Nachladen einzuleiten. Außerdem dauert der Rückführungs- und Nachladeprozess insgesamt relativ lange. Es sind zwar Steuerungsverfahren bekannt, die diese Probleme mit Hilfe von Navigationstechniken lokaler oder globaler Art umgehen, allerdings haben diese den Nachteil, aufwendig und teuer zu sein.

Aus der Druckschrift DE 698 29 411 T2 ist ein Mähroboter-System mit den Merkmalen des Oberbegriffs des Anspruchs 1 sowie ein Verfahren zur Rückführung eines autonom fahrenden Mähroboters mit den Merkmalen des Oberbegriffs des Anspruchs 23 bekannt.

Des Weiteren wird auf die Druckschriften WO 2022/080596 A1, US 9,903,947 B2, US 2013/0211647 A1 und WO 2022/134735 A1 verwiesen.

Es ist daher Aufgabe der Erfindung ein Bodenbearbeitungsroboter-System mit einem stromleitenden Schleifendraht zur Flächenbegrenzung und Rückführung des Roboters ohne Verwendung eines Navigationssystems dahingehend zu optimieren, dass die oben geschilderten Nachteile wie Spurenvermeidung und Verkürzung der Rückkehrzeit.

Diese Aufgabe wird durch die Merkmale der unabhängigen Patentansprüche gelöst. Vorteilhafte Weiterbildungen der Erfindung sind Gegenstand untergeordneter Ansprüche.

Die Erfinder haben erkannt, dass es möglich ist, insbesondere unter Verzicht auf ein lokales oder globales Navigationssystem, ein funkbasiertes Homingsystem, ein funkbasiertes Triangulationssystem oder eines Trägheitsnavigationssystems, die Führung eines Bodenbearbeitungsroboters, insbesondere eines Mähroboters, - allgemein auch Roboter genannt - durch einen Schleifendraht zu verbessern, indem die Intensität des Magnetfeldes, welches von einem Schleifenkabel ausgeht, an geeigneten Stellen verändert wird. Dabei kann die Stärke des Magnetfeldes entweder abgeschwächt oder verstärkt werden.

Vorzugsweise kann das Magnetfeld direkt durch die räumliche Anordnung des Schleifendrahtes, vorzugsweise in Form von in den Stromfluss des Schleifendrahtes eingebrachten Windungen auf engem Raum manipuliert werden. Beispielsweise kann dies durch entsprechende Verlegetechnik des Schleifendrahtes, welche die gewünschte Art und Anzahl an stromdurchflossenen Windungen ausbildet und damit eine lokale begrenzte Änderung des Magnetfeldes in der unmittelbaren Umgebung des Schleifendrahtes erzeugt, bewirkt werden. Zur Verstärkung der Wirkung der Drahtwindungen kann zusätzlich ein ferromagnetischer Kern in die Windungen eingebracht werden.

Alternativ kann die Manipulation des Magnetfeldes auch durch das Einbringen von vorzugsweise vorgefertigten passiven elektrischen oder elektronischen Bauteilen, insbesondere von Induktivitäten aus Magnetspulen mit und ohne Metallkern, in den Schleifendraht erfolgen. Dabei muss der Schleifendraht elektrisch so mit dem Bauteil verbunden werden, dass der Stromfluss, zumindest größtenteils, durch das eingebrachte Bauteil, insbesondere die eingebrachte Magnetspule, erfolgt. Als Metallkern kann beispielsweise auch ein Erdnagel verwendet werden, um den der Schleifendraht gewickelt wird.

Alternativ oder ergänzend kann auch eine Kapazität eingeschleift werden, deren Größe entsprechend der Frequenz und Stromstärke im Schleifendraht so gewählt werden kann, dass kein oder wenig dämpfender Einfluss auf den angelegten Wechselstrom ausgeübt wird.

Insgesamt wird erfindungsgemäß durch die hier beschriebenen Manipulationen eine lokal begrenzte Änderung des durch den Schleifendraht erzeugten Magnetfeldes bewirkt, was beim Entlangfahren des Roboters am Schleifendraht zu typischen Signaländerung am gemessenen Magnetfeldsignal führt. Das Magnetfeldsignal selbst wird vom Roboter gemessen, um eine Annäherung an einen Schleifendraht zu detektieren und ihn entlang des Schleifendrahtes zu führen. Änderungen dieses Magnetfeldsignals treten auch an anderen Stellen des Schleifendrahtes auf, beispielsweise an Ecken der Schleifenverlegung. Jedoch ist es möglich die zur Markierung eingebrachten Signaländerungen so auszugestalten, dass sie sich eindeutig von den sonstigen Signaländerungen unterscheiden. Insbesondere kann auch durch mehrere aufeinander folgende Signaländerungen, erzeugt durch eine Reihen-, Parallel- oder Mischschaltung von einzelnen Markierungselementen, eine Kodierung erfolgen, die vom Roboter eineindeutig erkannt werden kann. Auch können mehrere Manipulationen beziehungsweise Markierungen des Magnetfeldes voneinander unterschieden werden.

Grundsätzlich kann ein solcher durch Markierung veränderter typischer Signalverlauf des Magnetfeldes am Schleifendraht durch die Sensoren am Mähroboter unmittelbar, also ohne vorheriges Training, jedoch vorprogrammiert, erkannt werden. Vorzugsweise wird der Roboter durch einen Kalibriervorgang auf im Schleifendraht vorhandene Markierungen mit dem jeweils typischen Signalverlauf eingelernt, diese Verläufe und/oder kennzeichnende Parameter dieser Verläufe werden abgespeichert und stehen für die darauffolgenden Erkennungen zur Verfügung.

Weiterhin kann jeder typische Signalverlauf und/oder dessen Parametersatz mit einer Aktion oder mehreren vorbestimmten Aktionen verknüpft werden, die nach Erkennung des jeweiligen Signalverlaufes zur Ausführung kommen.

Es ist hierbei zu erwähnen, dass unter den Begriffen "vorbestimmte Aktion" und "nach Erkennung" auch unterschiedliche Aktionsvarianten und mit unterschiedlichen Verzögerungszeiten jeweils in vorgegebenem Rahmen subsumiert werden können. Dies betrifft beispielsweise die etwas variable Verzögerung und den etwas variablen Winkel für das Abwenden des Roboters vom Schleifdraht, wodurch vermieden wird, dass Spuren durch häufiges Überfahren oder Bearbeiten des gleichen Fahrweges entstehen.

Es wird außerdem darauf hingewiesen, dass im Rahmen der Erfindung unter "Ausführen einer Aktion" auch verstanden werden kann, dass eine im Standardverhalten des Roboters folgende Aktion dadurch unterdrückt wird. Beispielsweise kann so an einer bestimmten Stelle getriggert werden, dass der Roboter, falls er sich auf einer Rückführung zur Basisstation befindet, das Abbiegen des Schleifendrahtes ignoriert und auf dem anliegenden Kurs für eine bestimmte Zeit oder Strecke weiterfährt, bis er wieder auf den Schleifendraht stößt, dem er dann folgt. Dadurch kann beispielsweise eine Art Aussackung des zu bearbeitenden Feldes abgekürzt werden.

Im Betrieb wird also der Roboter diese vorprogrammierten oder eingelernten Signalverläufe über einen Algorithmus erkennen und die danach mindestens eine damit verknüpfte Aktion durchführen.

Eine solche typische Aktion entspricht beispielsweise eine Drehung des Roboters in das vom Schleifendraht begrenzte Feld. Wird der Schleifendraht stets im Uhrzeigersinn befahren, entspricht dies einem Schwenk nach rechts.

Bei entsprechender Positionierung der elektro-magnetischen Markierung im Schleifendraht kann erreicht werden, dass der Roboter eine Drehung in Richtung der Basisstation oder zur gegenüberliegenden Begrenzungsschleife des Feldes ausführt. Der Robotermäher bewegt sich also in diese Richtung, verkürzt damit den Weg zur Basis und vermeidet somit oben beschriebenen Nachteile des Standes der Technik.

Zum Rahmen der Erfindung zählt auch, dass der getriggerte Kursänderungswinkel variabel einstellbar oder auch zufällig oder gezielt variierend im Rahmen vorgegebener Winkelbereiche definiert wird. Entsprechendes gilt auch für die Reaktionszeit oder -strecke nach dem Erkennen eines als Markierung dienenden typischen Signalverlaufes beim Abfahren des Schleifendrahtes.

Entsprechend dieser Grundgedanken schlagen die Erfinder ein Bodenbearbeitungsroboter-System, insbesondere ein Mähroboter-System, vor, welches die folgenden Merkmale aufweist:
- eine Flächenbegrenzungsvorrichtung mit:
   -- einem stromleitenden Schleifendraht, welcher zur Begrenzung einer zu bearbeitenden Fläche und zur Rückführung des Roboters dient,
   -- einer Basisstation zur Stromversorgung, insbesondere auch des Schleifendrahtes, wobei der Schleifendraht unter vorliegender Stromversorgung ein Magnetfeld mit einer Intensität ausbildet,
   -- wobei der Schleifendraht an mindestens einer Position seiner Länge mindestens ein Mittel zur lokalen Veränderung der Intensität des erzeugten Magnetfeldes aufweist,
   -- ein autonom fahrender Bodenbearbeitungsroboter zur Bearbeitung der vom Schleifendraht umgrenzten Fläche mit:
   -- Mitteln zur Erkennung der Intensität des Magnetfeldes entlang des Schleifendrahtes,
   -- Mittel zur Erkennung eines Signalverlaufes einer sich verändernden Intensität des Magnetfeldes bei einer Bewegung entlang des Schleifendrahtes,
   -- einer Steuerung des Bodenbearbeitungsroboters, welche dazu ausgebildet ist, aufgrund einer positiven Erkennung eines vorgegebenen Signalverlaufes der Intensität des Magnetfeldes bei einer Bewegung entlang des Schleifendrahtes mindestens eine vorgegebene Aktivität auszulösen,
wobei die vorgegebene Aktivität bei der Bewegung entlang des Schleifendrahtes zumindest eine Steuerungsaktion des Bodenbearbeitungsroboters ist, mit welcher der Bodenbearbeitungsroboter die Bewegung entlang des Schleifendrahtes durch Steuerung in eine vorgegebene Richtung beendet.

Diese Aktivität oder Aktion des Beendens der Bewegung entlang des Schleifdrahtes bedeutet in anderer Weise ausgedrückt, dass der Bodenbearbeitungsroboter trotz des unveränderten Weiterverlaufens des Schleifdrahtes in gerader Richtung oder mit anhaltender Krümmung eine Richtungsänderung mit vorgegebenem Winkel ausführt oder alternativ trotz einer Richtungsänderung des Verlaufes des Schleifdrahtes auf eine Richtungsänderung verzichtet, also dieser Richtungsänderung nicht folgt und geradeaus weiterläuft beziehungsweise gesteuert wird.

Durch diese Maßnahmen ist es nun möglich, an einer oder mehreren Stellen des Schleifendrahtes durch eine Veränderung des Magnetfeldes einen Intensitätsverlauf am entlangfahrenden Roboter zu initialisieren, die der Roboter als typischen Verlauf erkennen kann und entsprechende Aktionen einleiten kann. Besonders vorteilhaft ist dabei, dass bereits bestehende Roboter, die mit einer Schleifendrahterkennung ausgestattet sind, durch einfaches Software-Update auf diese Technologie aufgerüstet werden können, wobei allerdings gleichzeitig die Manipulation des Schleifendrahtes an den gewünschten Stellen einer Markierung vorgenommen werden muss.

In einer besonderen Variante des Bodenbearbeitungsroboter-Systems wird vorgeschlagen, dass die Steuerung des Bodenbearbeitungsroboters dazu ausgebildet ist, auf unterschiedliche erkannte Signalverläufe jeweils andere und jedem Signalverlauf zugeordnete Aktivitäten auszuführen. Hierfür kann beispielsweise eine LUT (=Look-Up-Tabelle) in der Steuerung des Roboters integriert werden, welche unterschiedliche Signalverläufe und/oder deren typische Parameter zur Differenzierung der Signalverläufe enthält. Zu diesen unterschiedlichen Signalverläufen können dann jeweils ein oder mehrere zugeordnete Aktionen gespeichert werden, die die Steuerung des Roboters nach der Erkennung eines Signalverlaufes ausführt.

Vorzugsweise kann die Steuerung des Bodenbearbeitungsroboters dazu ausgebildet sein, dass der Roboter nach Erkennung eines vorgegebenen Signalverlaufes der Intensität des Magnetfeldes bei einer Bewegung entlang des Schleifendrahtes eine Richtungsänderung mit vorgegebenem Winkel ausführt. Dieser vorgegebene Winkel kann absolut vorgegeben werden, es kann aber auch ein vorgegebener Algorithmus festgelegt sein, der zufälligen oder systematischen Änderung des Winkels in einem bestimmten Winkelbereich herbeiführt. Dadurch kann die Spurbildung durch häufiges Abfahren der identischen Strecke verhindert werden.

Weiterhin kann die Steuerung des Bodenbearbeitungsroboters dazu auch ausgebildet sein, abhängig von der Ausprägung des Signalverlaufes unterschiedliche Richtungsänderungen mit vorgegebenem Winkel ausführt. Es erfolgt dabei also durch unterschiedliche induzierte Signalverläufe eine Codierung der Markierungen, wobei jedem Code ein individuell vorgegebener, gegebenenfalls in Grenzen variabler, Winkel zugeordnet ist.

In einer weiterhin vorteilhaften Ausgestaltung wird vorgeschlagen, dass die Steuerung des Bodenbearbeitungsroboter-Systems dazu ausgebildet ist, die Richtungsänderung zum Inneren der zu bearbeitenden Fläche, also zur gegenüberliegenden Seite des Schleifendrahtes, auszuführen.

Vorzugsweise wird die Steuerung des Bodenbearbeitungsroboters dazu ausgebildet, die Richtungsänderung in Richtung der Basisstation auszuführen und somit den Rückweg zu verkürzen. Hierzu gehört allerdings auch, dass die Markierung am Schleifendraht räumlich so in Relation zur jeweils individuell ausgebildeten zu bearbeitenden Fläche angebracht ist, dadurch eine verkürzte Rückführung des Roboters möglich ist.

Da der Signalverlauf des Magnetfeldes entlang eines individuell um eine Arbeitsfläche verlegten Schleifendrahtes mit großen nicht unbedingt vorhersehbaren Variationen behaftet ist, ist es besonders vorteilhaft, wenn der Bodenbearbeitungsroboter dazu ausgebildet ist, mindestens einen Signalverlauf der Intensität des Magnetfeldes bei einer Bewegung entlang des Schleifendrahtes, der eine vorgegebene Aktion initiiert, anzulernen und im System abzuspeichern, vorzugsweise zusammen mit einer spezifischen zugeordneten Aktion abzuspeichern. Damit kann die jeweils individuelle Ausprägung und Anordnung von Markierungsmitteln im Schleifendraht unter den jeweils individuellen Umgebungsbedingungen berücksichtigt werden und die Fehlerrate bei der Erkennung des jeweiligen Signalverlaufes von einer oder mehreren Markierungen stark vermindert werden.

In einer weiteren vorteilhaften Ausgestaltung des Bodenbearbeitungsroboter-System wird vorgeschlagen, dass der Schleifendraht der Flächenbegrenzungsvorrichtung über dessen Länge verteilt, mehrere Mittel zur Veränderung der Intensität des Magnetfeldes aufweist.

Hierbei können weiterhin die Mittel zur Veränderung der Intensität des Magnetfeldes am Schleifendraht in mindestens zwei Gruppen derart aufgeteilt und am Schleifendraht angeordnet werden, dass jede Gruppe einen eineindeutigen Signalverlauf der Intensität des Magnetfeldes bei einer Bewegung entlang des Schleifendrahtes und damit eine individuelle Codierung erzeugt.

Im erfindungsgemäßen Bodenbearbeitungsroboter-System kann mindestens ein Mittel zur Veränderung der Intensität des Magnetfeldes am Schleifendraht eine im Schleifendraht als im Stromkreis integrierte Luftspule mit einer Vielzahl von Windungen gewählt werden.

Weiterhin kann auch mindestens ein Mittel zur Veränderung der Intensität des Magnetfeldes am Schleifendraht eine im Schleifendraht als im Stromkreis integrierte Spule mit einer Vielzahl von Windungen und einem zusätzlichen ferromagnetischen Kern gewählt werden. In der einfachsten Variante kann dies durch Umwicklung eines Erdhakens mit mehreren Windungen des Schleifendrahtes geschehen.

Außerdem kann auch eine Veränderung der Intensität des Magnetfeldes am Schleifendraht durch eine in die Stromschleife eingebundene Kapazität erreicht und entsprechend detektiert werden. Dies bedingt allerdings, dass der magnetfeldbildende Stromfluss als Wechselstrom ausgebildet sein muss. Bei Gleichstrom würde eine Kapazität, also ein Kondensator, den Stromfluss unterbinden.

Soll eine Abschwächung des Magnetfeldes erreicht werden, so kann eine Abschirmung des Schleifendrahtes über eine Teilstrecke des Schleifendrahtes angeordnet werden.

Es wird darauf hingewiesen, dass es sich bei einem erfindungsgemäßen Bodenbearbeitungsroboter-System vornehmlich um ein System handelt, welches orientierungstechnisch ausschließlich auf die Verwendung des Schleifendrahtes abstellt und somit frei von Navigationssystemen ist, die nicht auf einem Schleifendraht basieren. Das System verfügt also nicht über Funkortsbestimmungsmittel, wie Satellitennavigation, GPS, GLOSSNAS, Bluetooth-Navigation, Funk-Triangulationsmitteln, Funk-Homingsysteme, und auch nicht über Trägheitsnavigationssysteme.

Im Rahmen der Erfindung schlagen die Erfinder auch die Verwendung eines autonom fahrenden Bodenbearbeitungsroboters vor, insbesondere einen Mähroboter, zur Verwendung mit einer Flächenbegrenzungsvorrichtung mit einem Schleifendraht mit mindestens einem Mittel zur lokalen Veränderung der Intensität des Magnetfeldes am Schleifendraht, mit:
- Mitteln zur Erkennung der Intensität des Magnetfeldes entlang des Schleifendrahtes,
- Mittel zur Erkennung eines Signalverlaufes einer sich verändernden Intensität des Magnetfeldes bei einer Bewegung entlang des Schleifendrahtes, und
- einer Steuerung des Bodenbearbeitungsroboters, welche dazu ausgebildet ist, aufgrund einer positiven Erkennung eines vorgegebenen Signalverlaufes der Intensität des Magnetfeldes bei einer Bewegung entlang des Schleifendrahtes mindestens eine vorgegebene Aktivität auszulösen,
- wobei die vorgegebene Aktivität bei der Bewegung entlang des Schleifendrahtes zumindest eine Steuerungsaktion des Bodenbearbeitungsroboters enthält, mit welcher der Bodenbearbeitungsroboter die Bewegung entlang des Schleifendrahtes durch Steuerung in eine vorgegebene Richtung beendet.

Der erfindungsgemäße Bodenbearbeitungsroboter kann dabei die oben beschriebenen roboterbezogenen Merkmale aufweisen.

Ebenfalls wird im Rahmen der Erfindung die Verwendung einer Flächenbegrenzungsvorrichtung zur Verwendung mit einem autonom fahrenden Bodenbearbeitungsroboter beschrieben, der
- Mittel zur Erkennung der Intensität eines Magnetfeldes entlang eines Schleifendrahtes,
- Mittel zur Erkennung eines Signalverlaufes der sich verändernden Intensität des Magnetfeldes bei einer Bewegung entlang des Schleifendrahtes, und
- eine Steuerung des Bodenbearbeitungsroboters aufweist, welche dazu ausgebildet ist, aufgrund einer positiven Erkennung eines vorgegebenen Signalverlaufes der Intensität des Magnetfeldes bei einer Bewegung entlang des Schleifendrahtes mindestens eine vorgegebene Aktivität auszulösen, die Flächenbegrenzungsvorrichtung mit:
   - einem stromleitenden Schleifendraht, welcher zur Begrenzung einer zu bearbeitenden Fläche und zur Rückführung des Roboters dient,
   - einer Basisstation zur Stromversorgung, insbesondere auch des Schleifendrahtes, wobei der Schleifendraht unter vorliegender Stromversorgung ein Magnetfeld mit einer Intensität ausbildet,
   - wobei der Schleifendraht an mindestens einer Position seiner Länge mindestens ein Mittel zur lokalen Veränderung der Intensität des auftretenden Magnetfeldes am Schleifendraht aufweist, welche zumindest eine vorgegebene Aktivität des Bodenbearbeitungsroboters bei der Bewegung entlang des Schleifendrahtes bewirkt, mit welcher der Bodenbearbeitungsroboter die Bewegung entlang des Schleifendrahtes durch Steuerung in eine vorgegebene Richtung beendet.

Entsprechend kann die Flächenbegrenzungsvorrichtung die oben beschriebenen schleifendrahtbezogenen Merkmale aufweisen.

Es wird außerdem noch eine Vorrichtung zur lokalen Veränderung der Intensität des durch einen Schleifendraht erzeugten Magnetfeldes beschrieben, aufweisend:
- eine, einen isolierten Draht umklammernde, Ummantelung aus Kunststoff,
- ein in die Ummantelung integriertes Schneid-/Isolierelement zum Durchtrennen eines durch die Ummantelung verlaufenden Schleifendrahtes,
- zwei in die Ummantelung integrierte jeweils seitlich vom Schneid-/Isolierelement angeordnete Abisolier-/Verbindungselemente,
- eine in die Ummantelung integrierte Spule, wobei eine leitende Verbindung zu jeweils einem Spulenende mit jeweils einem der beiden Abisolier-/Verbindungselemente vorliegt.

Mit einer solche Vorrichtung kann - ähnlich, wie man sogenannte Stromdiebe in eine bestehende Leitung einklipst -auf einfache Weise eine Spule in einen Schleifendraht eingebracht werden. Hierbei wird der Schleifendraht in die Vorrichtung eingelegt, dann vorzugsweise gleichzeitig durch Betätigung der Vorrichtung der Schleifendraht getrennt und die verbleibenden Enden des Schleifendrahtes mit den Enden der Spule in der Vorrichtung verbunden. Hierzu kann eine Zange verwendet werden, welche die entsprechenden Schneid- und Verbindungselemente betätigt.

Vorteilhaft kann die Spule auch einen ferromagnetischen Kern aufweisen.

Weiterhin wird auch ein Erdnagel zur Befestigung eines Schleifendrahtes am Rande einer durch einen Bodenbearbeitungsroboter zu bearbeitenden Fläche beschrieben, wobei der Erdnagel zumindest teilweise aus ferromagnetischem Metall besteht und eine Spule mit einer Vielzahl von Windungen zumindest einen Teil des ferromagnetischen Metall umschließen, wobei die Spulenenden mit dem Schleifendraht so verbunden werden können, dass ein Stromfluss durch den Schleifendraht über die Spule des Erdnagel geleitet wird.

Des Weiteren wird ein Verfahren zur Rückführung eines autonom fahrenden Bodenbearbeitungsroboters vorgeschlagen, dessen zu bearbeitende Fläche durch einen Schleifendraht begrenzt und der unter Verwendung des Schleifendrahtes und eines durch den Schleifendraht erzeugten Magnetfeldes zu einer Basisstation rückgeführt wird, wobei der Roboter die Intensität des Magnetfeldes am Schleifendraht detektiert und aufgrund einer Erkennung eines vorgegebenen typischen Intensitätsverlaufes während der Bewegung entlang des Schleifendrahtes eine vorgegebene Aktion ausgelöst wird, welche bei der Bewegung des Bodenbearbeitungsroboters entlang des Schleifendrahtes zumindest eine Steuerungsaktion des Bodenbearbeitungsroboters auslöst, mit welcher der Bodenbearbeitungsroboter die Bewegung entlang des Schleifendrahtes durch Steuerung in eine vorgegebene Richtung beendet.

Die Erkennung eines typischen Intensitätsverlaufes kann beispielsweise durch Vorliegen gegebener Parameter, wie Steilheit des Signalanstieges, Mindestwertüberschreitung relativ zu einem mitlaufenden Mittelwert der vorherigen Intensitäten, etc. bestehen. Alternativ können auch Mustererkennungsverfahren, gegebenenfalls auch unter Anwendung von KI-Verfahren verwendet werden.

In einer bevorzugten Variante des Verfahrens kann auch gefordert werden, dass zur Ausführung der mindestens einen Aktion zusätzlich zur Erkennung eines vorgegebenen typischen Intensitätsverlaufes eine während der Bewegung entlang des Schleifendrahtes auch mindestens vorgegebene Betriebsbedingung vorliegen muss. Beispielsweise kann ein Schwenk zur Innenseite der durch den Schleifendraht umrandeten Fläche nur dann erfolgen, wenn der Roboter sich auf dem Rückweg zur Basisstation befindet.

Weiterhin ist es besonders vorteilhaft, wenn der vorgegebene Intensitätsverlauf zuvor angelernt oder erlernt wurde. Hierdurch kann sich das System optimal auf Besonderheiten einstellen, die abhängig von der individuellen Verlegung des Schleifendrahtes sind.

Das Verfahren kann auch so ausgestaltet sein, dass unterschiedliche Intensitätsverläufe unterschiedliche Aktionen auslösen.

Insbesondere kann mindestens eine Aktion darin bestehen, dass der Roboter zu einer vorgegebenen Zeit nach der Erkennung eines bestimmten Intensitätsverlaufes mit einem vorgegebenen Winkel vom Schleifendraht zum gegenüberliegenden Abschnitt des Schleifendrahtes oder zur Basisstation hin abbiegt.

Mindestens eine Aktion kann auch darin bestehen, dass der Roboter nach der Erkennung eines bestimmten Intensitätsverlaufes mit einem vorgegebenen Winkel vom Schleifendraht seitlich versetzt und parallel zum Schleifendraht weiterfährt.

Es wird außerdem darauf hingewiesen, dass eine Aktion auch in der Unterlassung einer Änderung bestehen kann. Beispielsweise durch nichtverfolgen des Schleifendrahtes nach einer Markierung, obwohl der Schleifendraht seine Richtung wechselt.

Im Folgenden wird die Erfindung anhand bevorzugter Ausführungsbeispiele mit Hilfe der Figuren näher beschrieben, wobei nur die zum Verständnis der Erfindung notwendigen Merkmale dargestellt sind.

Es zeigen im Einzelnen:
- FIG 1:: eine schematische Darstellung eines bekannten Bodenbearbeitungsroboter-Systems,
- FIG 2:: Signalverlauf in Abhängigkeit der Zeit,
- FIG 3:: Signalverlauf mit eindeutigen Markierungen,
- FIG 4:: eine schematische Darstellung eines erfindungsgemäßen Bodenbearbeitungsroboter-Systems in einer ersten Ausführungsvariante,
- FIG 5:: eine schematische Darstellung eines erfindungsgemäßen Bodenbearbeitungsroboter-Systems in einer weiteren Ausführungsvariante, und
- FIG 6:: eine schematische Darstellung eines erfindungsgemäßen Bodenbearbeitungsroboter-Systems in noch einer weiteren Ausführungsvariante.

Der Kerngedanke der Erfindung besteht darin, bei dem eingangs beschriebenen Bodenbearbeitungsroboter-System das ausschließlich mit dem System eines stromdurchflossenen Schleifendrahtes W zur Orientierung eine vom Schleifendraht W umfasste Fläche F zu bearbeiten, das vom Schleifendraht erzeugte Magnetfeld F lokal derart zu manipulieren, dass die dadurch bedingte lokale Veränderung des Magnetfeldes als Markierung M, M1-M5 vom Roboter R mit dem Magnetfelddetektor D erkannt wird. Der Roboter verfügt dabei in bekannter Weise über einen Magnetfelddetektor D und eine Steuerung mit einem Prozessor und einem Speicher zum Abspeichern von Programmcode und Daten, wie einer LUT, wobei der Programmcode im Betrieb ausgeführt wird und dabei auch das erfindungsgemäße Verfahren ausführt. Gegenüber dem bekannten Roboter mit Schleifendrahttechnologie unterscheidet sich der Roboter somit im Wesentlichen durch die gespeicherten Daten bezüglich der Markierungserkennung und dem Programmcode, der die Markierungserkennung und die von Markierungen getriggerten Aktionen ausführt.

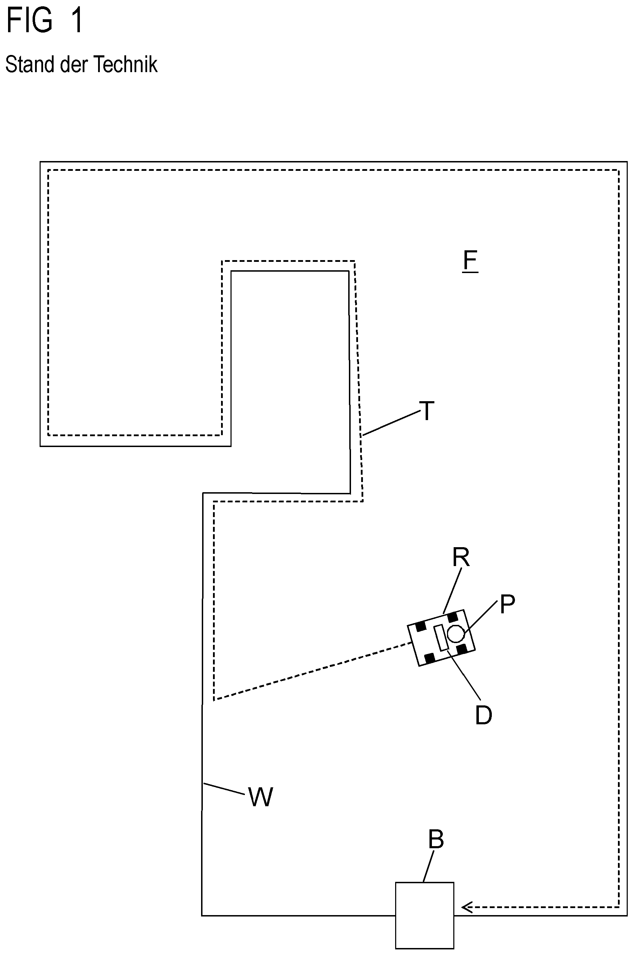

Die **Figur 1** zeigt die bekannte Situation eines Bodenbearbeitungsroboter-Systems, hier mit einem Mähroboter R, der sich ausschließlich mit Hilfe eines, die zu bearbeitende Fläche F umgebenden, Schleifendrahtes W orientiert, wenn der Roboter R aufgrund erledigter Arbeit oder aufgrund weitgehend entladener Energiezelle beginnen an einem zufälligen Ort in der Fläche F zur Basisstation zurückfinden soll. Der Roboter R behält dabei seinen zu diesem Zeitpunkt anliegenden Kurs bei, bis er irgendwann am Schleifendraht ankommt und diesen mit seinem Detektor, einem Magnetfeldsensor, erkennt. Er wendet dabei in eine vorgegebene Richtung, hier nach rechts, und folgt mangels besserer Information mit seinem Fahrweg T dem Schleifendraht W so lange, bis er die Basisstation erreicht hat. Bei grundsätzlich zufälligem Verhalten des Mähroboters R sind dabei auch sehr lange Wege in Kauf zu nehmen, wobei im statistischen Mittel etwa der halbe Umfang der Fläche F zurückgelegt werden dürfte. Hierdurch ergeben sich die oben geschilderten Nachteile, wie Spurbildung und hoher Energieaufwand für die Rückführung, der im Energiemanagement des Roboters R zu berücksichtigen ist.

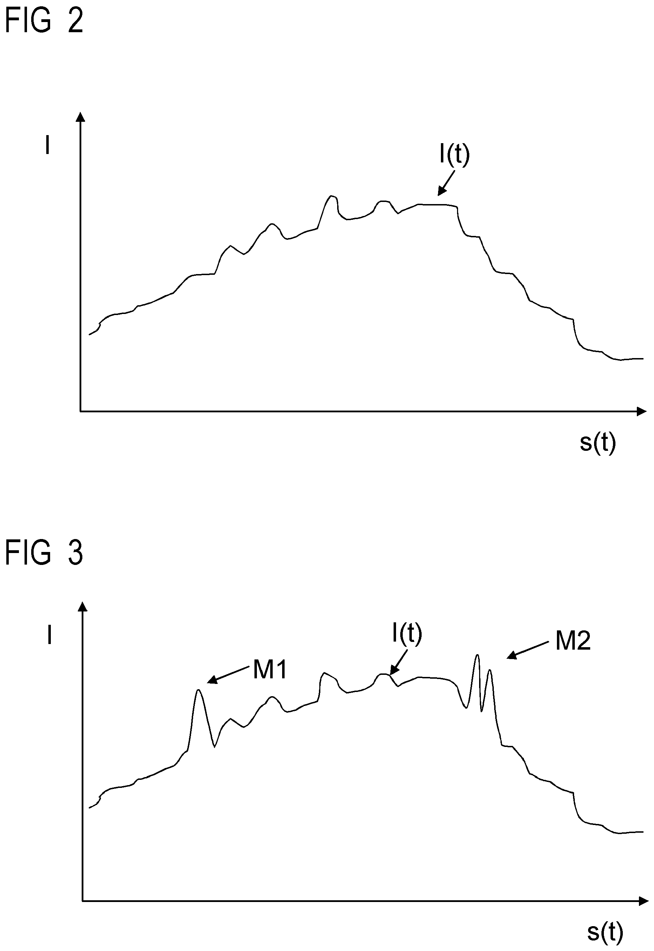

Betrachtet man die Intensität des Signals am Detektor D, so ergibt sich ein Signalverlauf I(s) über die zurückgelegte Strecke s der Roboters R entlang des Schleifendrahtes W, die wiederum entsprechend eine Funktion der Zeit ist, wie es in der **Figur 2** beispielhaft dargestellt ist. Es ist leicht zu erkennen, dass der Signalverlauf I(t) mit relativ hohen Schwankungen einhergeht.

Aufgrund gesetzlicher Bestimmungen bezüglich des EMV-Verhalten eines Schleifendrahtes ist es nicht einfach möglich beliebig starke magnetische Peaks am Schleifendraht zu induzieren, die eindeutig über dem Niveau der Intensität des magnetischen Feldes des Schleifendrahtes liegen und einfach zu detektieren wären. Erfindungsgemäß wird daher mit Intensitätsmaxima zur Markierung gearbeitet, deren Niveau relativ nahe an teilweise erreichten Intensitäten eines Schleifendrahtes ohne magnetische Markierung liegen. Um solche geringen Intensitätserhöhungen zu erkennen, werden daher BIAS-Glättungen, zum Beispiel durch Berechnung mitlaufender Mittelwerte, und/oder Mustererkennungsverfahren angewendet. In der **Figur 3** sind solche typischen Signalverläufe mit eindeutigen Markierungen M1 und M2 dargestellt. Bezüglich der Codierung mehrerer zu unterscheidender Markierung wird auf allgemein bekannte Codierungsverfahren verwiesen. Besonders günstig ist es dabei, wenn der Roboter R bei tatsächlich im Feld angebrachten Markierung bezüglich des tatsächlich vorliegenden Signalverlaufes eingelernt wird.

Werden zusätzliche Induktivitäten für die punktuelle Erhöhung des Signals in die Schleife einfügt, ist das im Prinzip für das Gesamtsystem zunächst eine Störstelle. Es sinkt das Gesamtschleifensignal ab und die maximale Größe eines Feldes F wird auch theoretisch kleiner. Es werden daher vorzugsweise relativ kleine Induktivitäten im Bereich von ca. 10 µH bis 100 µH verwendet.

Um die veränderten Signalverläufe durch eingesetzte Spulen zu erkennen, sollte dem Roboter R der tatsächliche Signalverlauf eingelernt werden, denn der Signalverlauf ist bei jeder Installation oder Schleifenlänge unterschiedlich ausgeprägt.

Für solch eine beispielhafte Kalibrierung kann der Roboter so platziert werden, dass er mindestens einen Meter vor dem zu messenden Signal auf die Schleife auffährt. Der Roboter führt dann in regelmäßigen Zeit oder Wegabständen eine Messung des Schleifensignals aus, zum Beispiel alle 100 ms. Diese Messwerte werden in einer vorgegebenen mitlaufenden Anzahl gespeichert, so dass immer ein gleich langer Ausschnitt des Schleifensignalverlaufes im Speicher liegt. Über diese abgespeicherten Werte können Glättungsalgorithmen ausgeführt werden, so dass Signalverzerrungen durch sich ändernden BIAS aufgehoben werden und zu einer besseren Erkennung typischer Signalverläufe führen.

Insbesondere können zur Erkennung bestimmter Signalverläufe typische Parameter wie, Signalmaximum oder -minimum zum BIAS, Breite eines Peaks, Integralwerte, Durchschnittswerte, etc. ermittelt und mit angelernten Werten ermittelt werden. Diese Werte können im Rahmen der Kalibrierung fest als Referenzparameter in einem Speicher des Roboters abgelegt und mit einer gewünschten Aktion verknüpft werden.

Wenn der Roboter nun die Station sucht und am Schleifenkabel entlangfährt, können diese typischen Parameter stetig berechnet und mit den abgespeicherten Referenzparametern verglichen werden. Im Falle einer Übereinstimmung in vorgegebenen Toleranzbereichen kann dies dann als positive Erkennung einer bestimmten Markierung gewertet werden und die dazu zugeordnete Aktion ausgeführt werden.

Neben dem oben geschilderten Verfahren können auch andere bekannte Signal- und Mustererkennungsverfahren verwendet werden.

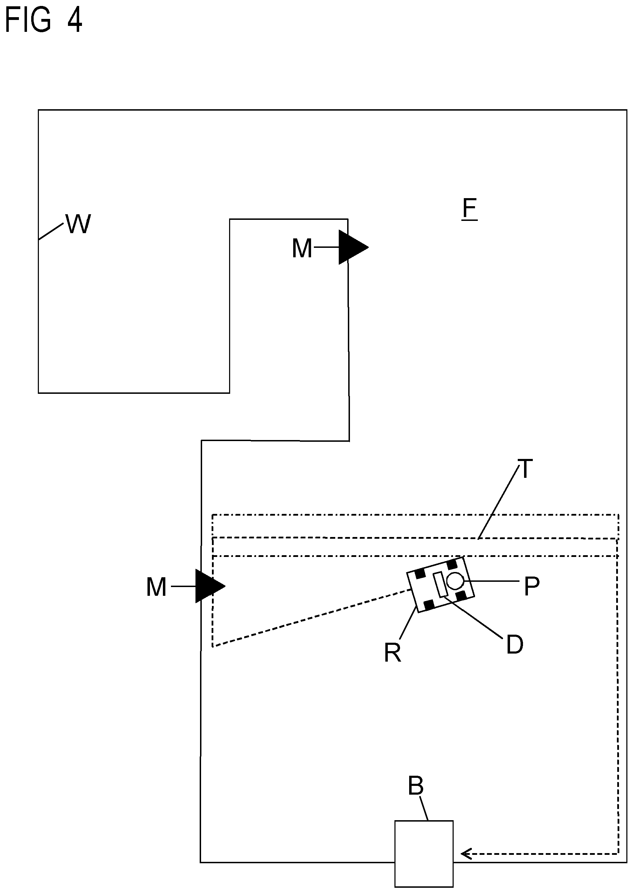

Neben der Erkennung einer Markierung und auch der Unterscheidung unterschiedlicher Markierungen ist es für den Effekt der Erfindung auch nicht unerheblich, wo im Schleifendraht bei einer gegebenen Fläche die Markierung angeordnet wird und welche Aktion des Roboters darauf erfolgt. Eine generelle Regel zur optimalen Anbringung von einer Markierung oder mehreren Markierungen in einem Schleifendraht ist schwer zu geben, da die optimale Position der Markierungen mit den entsprechenden wegabkürzenden Aktionen stark von der individuellen Ausbildung der zu bearbeitenden Fläche und gegebenenfalls dort vorhandener Hindernisse abhängt. In den Figuren 4 bis 6 werden jedoch mehrere Varianten unterschiedlicher Positionierungen der Markierungen und unterschiedliche mit den Markierungen verknüpfte Aktionen gezeigt. Bei allen Beispielen wird davon ausgegangen, dass der Roboter R den Schleifendraht W im Uhrzeigersinn abfährt.

Die **Figur 4** zeigt eine von einem Roboter R zu bearbeitende Fläche F, die durch einen Schleifendraht W umfasst wird. Die Kontur der Fläche F ist deckungsgleich mit der Fläche F aus der Figur 1 und enthält eine größere erste Teilfläche rechts und eine kleinere zweite Teilfläche links oben in Form einer Aussackung, die oben über einen Korridor miteinander verbunden sind. Der Schleifendraht W verfügt über zwei gleiche Markierungen M, die jeweils auf dem linken aufsteigenden Ast des Schleifendrahtes W angeordnet sind. Die Positionierung und Fahrtrichtung des Roboters R entspricht zu Beginn seines Fahrweges T ebenfalls der Figur 1. Sobald der Roboter R allerdings auf seinem Fahrweg T auf eine der Markierungen M trifft, wird er diese erkennen und die gespeicherte Aktion, nämlich einen Rechtsschwenk um 90° weg vom Schleifendraht W zur gegenüberliegenden Seite der Fläche F ausführen, dort wieder auf den Schleifendraht W treffen und sich entlang des Schleifendrahtes W im Uhrzeigersinn zur Basisstation B geführt werden. Konkret dargestellt ist der eine ausgewählte Fahrweg T (gestrichelte Linie) des Roboters R, der aufgrund seiner Positionierung und Fahrtrichtung gemäß Figur 1 entsteht.

Alle sonstigen Positionierungen und Fahrtrichtungen, die zu einem ersten Kontakt des Roboters R mit dem Schleifendraht W vor einer der Markierungen M führen, führen dann auch zu einer entsprechend verkürzten Rückführung des Roboters R zur Basisstation und reduzieren die Spurbildungen. In diesem Beispiel wird davon ausgegangen, dass alle Markierung die gleiche Aktion eines Rechtsschwenkes auslösen. Zur noch besseren Vermeidung von Spurbildung kann dann noch eine unterschiedliche Reaktionszeit oder ein unterschiedlicher Reaktionsweg des Roboters R für die durchgeführte Aktion einprogrammiert sein. Hier kann beispielsweise mit einem Zähler bezüglich der Anzahl der Abbiegungen oder mit einer Zufallszahl gearbeitet werden. Außerdem können entsprechend vom Mal zu Mal unterschiedliche Abbiegewinkel, zum Beispiel im Bereich von 90° +/- 10° gesteuert werden. Auch Kombinationen hiervon zählen zum Rahmen der Erfindung.

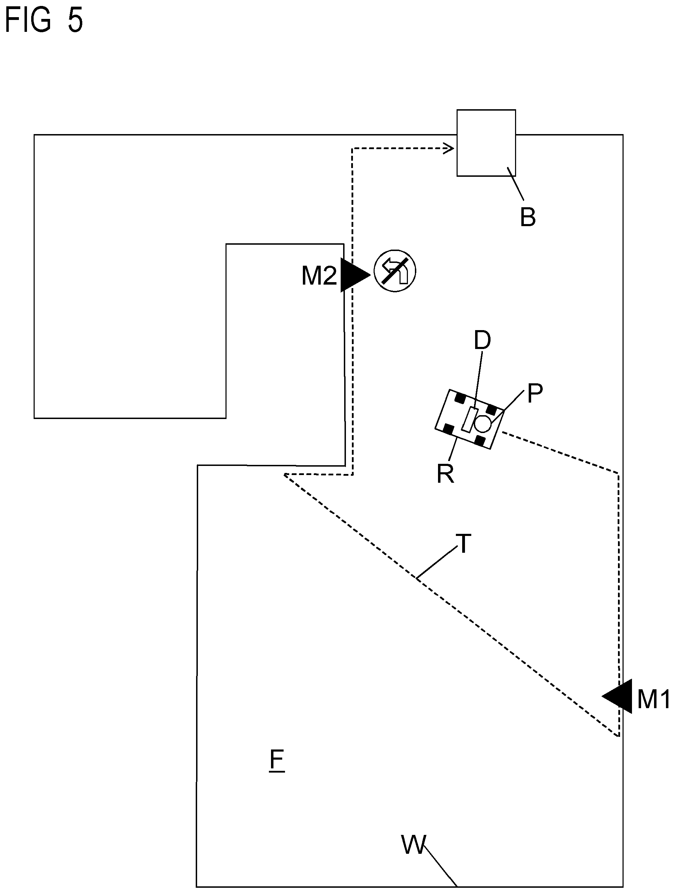

In der **Figur 5** ist nochmals die gleiche Kontur einer zu bearbeitenden Fläche F wie in den Figuren 1 und 4 gezeigt, allerdings befindet sich hier die Basisstation nicht unten in der Seitenmitte, sondern an der oberen Seite im rechten Drittel. Die Ausgangspositionierung und Ausgangsfahrtrichtung des Roboters R wurde ebenfalls geändert. Im Schleifendraht W befinden sich nun eine erste Markierung M1 mit der Zuordnung einer ersten Aktion in Form eines spitzwinkligen Rechtsschwenkes und eine zweite unterschiedliche Markierung M2 mit der Zuordnung einer zweiten Aktion. Die zweite Aktion besteht darin, dass der Roboter für eine vorgegebene Zeit oder Strecke die Führung des Schleifendrahtes ignoriert und seinen anliegenden Kurs weiterfährt, bis er wieder auf den Schleifendraht trifft und diesem dann wieder folgt.

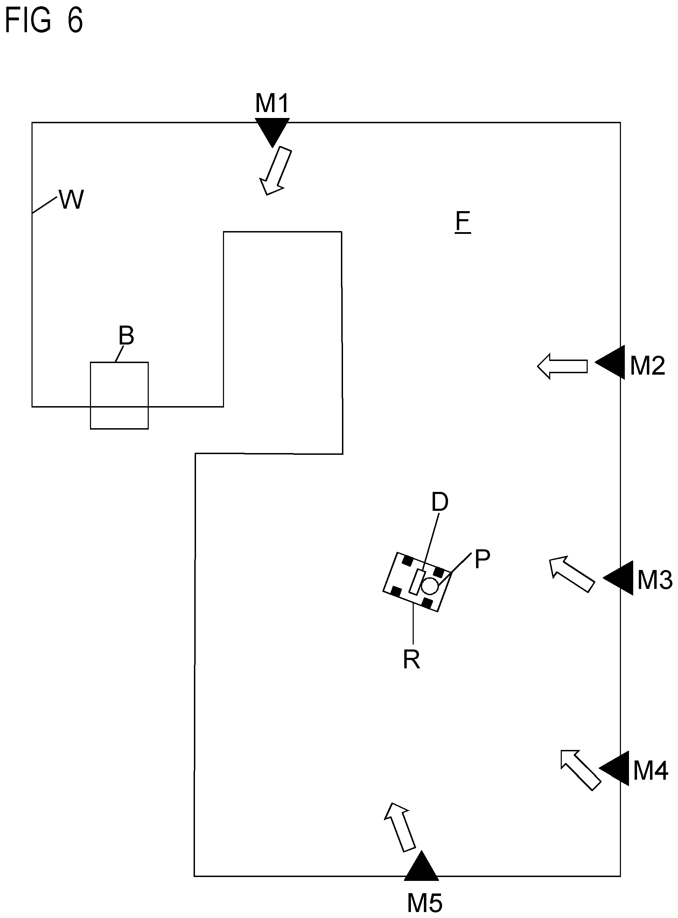

Ein beispielhafter Fahrweg T des Roboters R mit der gezeigten Ausgangssituation ist wieder gestrichelt dargestellt. Der Roboter R trifft dabei auf seinem Weg in Richtung rechts unten (~ 04 Uhr) auf den Schleifendraht W, wird dann in Uhrzeigersinn zur nächsten Markierung M1 geführt und dort in einem spitzen Winkel zum gegenüberliegenden Schleifendraht W geschickt, wodurch schon ein wesentlicher Teil der Rückführung abgekürzt ist. Von dort geht es weiter entlang des Schleifendrahtes W zur nächsten Markierung M2. Diese ist kurz vor der Abbiegung zur zweiten Teilfläche angeordnet und bewirkt, dass der Roboter R unter Missachtung der Richtungsänderung des Schleifendrahtes W geradeaus weiter zur gegenüberliegenden Seite des Korridors geleitet wird. Dort erkennt der Roboter R wieder den Schleifendraht W und biegt rechts in Richtung der Basisstation B ab. Insgesamt wird durch diese Anordnung der Markierungen und damit verbundener Aktionen der Rückweg T des Roboters R wesentlich gegenüber einer Situation aus der Figur 1 ohne Markierungen wesentlich abgekürzt, dafür vorzuhaltende Energie eingespart und Spurbildung reduziert. Die **Figur 6** zeigt weitere Varianten von Markierungen M1 bis M5 mit unterschiedlichen zugeordneten Aktionen an diversen Positionierungen im Schleifendraht W, wobei hier die Basisstation B in der zweiten Teilfläche angeordnet ist. Die Markierungen M1 bis M5 erzeugen jeweils ein Wegschwenken der Roboters R vom Schleifendraht W mit unterschiedlichen Winkeln, wobei diese jeweils so gewählt sind, dass eine möglichst große Verkürzung des restlichen Fahrweges zurück zur Basisstation B unter gleichzeitiger Sicherstellung, dass geringe Ungenauigkeiten im Fahrweg trotzdem sicher zu einer Auffanglinie im Schleifendraht W führen, erreicht wird.

Insgesamt betrifft die Erfindung ein Bodenbearbeitungsroboter-System, aufweisend: eine Flächenbegrenzungsvorrichtung mit: einem stromleitenden Schleifendraht, einer Basisstation zur Stromversorgung, wobei der Schleifendraht unter vorliegender Stromversorgung ein Magnetfeld mit einer Intensität ausbildet und an mindestens einer Position seiner Länge mindestens ein Mittel zur lokalen Veränderung der Intensität des erzeugten Magnetfeldes aufweist, ein autonom fahrender Bodenbearbeitungsroboter mit: Mitteln zur Erkennung der Intensität des Magnetfeldes entlang des Schleifendrahtes, Mittel zur Erkennung eines Signalverlaufes einer sich verändernden Intensität des Magnetfeldes bei einer Bewegung entlang des Schleifendrahtes, einer Steuerung des Bodenbearbeitungsroboters, welche dazu ausgebildet ist, aufgrund einer positiven Erkennung eines vorgegebenen Signalverlaufes der Intensität des Magnetfeldes bei einer Bewegung entlang des Schleifendrahtes mindestens eine vorgegebene Aktivität auszulösen. Weiterhin betrifft die Erfindung ein Verfahren zur Rückführung des Bodenbearbeitungsroboters.

### Bezugszeichenliste

- B: Basisstation
- D: Detektor
- F: zu bearbeitende Fläche
- M, M1-M5: Markierungen oder Gruppe von Markierungen
- P: Steuerung mit Prozessor, Speicher und Programmcode
- R: Bodenbearbeitungsroboter, Mähroboter, Roboter
- W: Schleifendraht
- T: Fahrweg des Roboters

## Patentansprüche

1. Bodenbearbeitungsroboter-System, insbesondere Mähroboter-System, aufweisend:
1.1. eine Flächenbegrenzungsvorrichtung mit:
1.1.1. einem stromleitenden Schleifendraht (W), welcher zur Begrenzung einer zu bearbeitenden Fläche (F) und zur Rückführung eines Bodenbearbeitungsroboters (R) dient,
1.1.2. einer Basisstation (B) zur Stromversorgung, insbesondere auch des Schleifendrahtes (W), wobei der Schleifendraht (W) unter vorliegender Stromversorgung ein Magnetfeld mit einer Intensität (I) ausbildet,
1.1.3. wobei der Schleifendraht (W) an mindestens einer Position seiner Länge mindestens ein Mittel (M) zur lokalen Veränderung der Intensität des erzeugten Magnetfeldes aufweist,
1.2. ein autonom fahrender Bodenbearbeitungsroboter (R) zur Bearbeitung der vom Schleifendraht (W) umgrenzten Fläche (F) mit:
1.2.1. Mitteln (D) zur Erkennung der Intensität des Magnetfeldes entlang des Schleifendrahtes,
1.2.2. Mittel zur Erkennung eines Signalverlaufes einer sich verändernden Intensität (I) des Magnetfeldes bei einer Bewegung entlang des Schleifendrahtes (W),
1.2.3. einer Steuerung (P) des Bodenbearbeitungsroboters (R), welche dazu ausgebildet ist, aufgrund einer positiven Erkennung eines vorgegebenen Signalverlaufes der Intensität (I) des Magnetfeldes bei einer Bewegung entlang des Schleifendrahtes (W) mindestens eine vorgegebene Aktivität auszulösen,
**dadurch gekennzeichnet, dass**
1.2.4. die vorgegebene Aktivität bei der Bewegung entlang des Schleifendrahtes (W) zumindest eine Steuerungsaktion des Bodenbearbeitungsroboters (R) ist, mit welcher der Bodenbearbeitungsroboter (R) die Bewegung entlang des Schleifendrahtes (W) durch Steuerung in eine vorgegebene Richtung beendet.

2. Bodenbearbeitungsroboter-System gemäß dem voranstehenden Patentanspruch, **dadurch gekennzeichnet, dass** die Steuerung des Bodenbearbeitungsroboters (R) dazu ausgebildet ist, die vorgegebene Aktivität nur dann auszulösen, wenn eine vorgegebene Betriebssituation vorliegt.

3. Bodenbearbeitungsroboter-System gemäß einem der voranstehenden Patentansprüche, **dadurch gekennzeichnet, dass** die Steuerung (P) des Bodenbearbeitungsroboters (R) dazu ausgebildet ist, auf unterschiedliche erkannte Signalverläufe jeweils andere und jedem Signalverlauf zugeordnete Aktivitäten auszuführen.

4. Bodenbearbeitungsroboter-System gemäß einem der voranstehenden Patentansprüche, **dadurch gekennzeichnet, dass** der Bodenbearbeitungsroboter (R) dazu ausgebildet ist, mindestens einen Signalverlauf der Intensität (I) des Magnetfeldes bei einer Bewegung entlang des Schleifendrahtes (W), der eine vorgegebene Aktion initiiert, anzulernen und im System abzuspeichern, vorzugsweise zusammen mit einer spezifischen zugeordneten Aktion abzuspeichern.

5. Bodenbearbeitungsroboter-System gemäß einem der voranstehenden Patentansprüche, **dadurch gekennzeichnet, dass** der Schleifendraht (W) der Flächenbegrenzungsvorrichtung über dessen Länge verteilt mehrere Mittel (M) zur Veränderung der Intensität des Magnetfeldes aufweist.

6. Bodenbearbeitungsroboter-System gemäß dem voranstehenden Patentanspruch 5, **dadurch gekennzeichnet, dass** die Mittel (M) zur Veränderung der Intensität (I) des Magnetfeldes am Schleifendraht (W) in mindestens zwei Gruppen derart aufgeteilt und am Schleifendraht (W) angeordnet sind, wobei jede Gruppe einen eineindeutigen Signalverlauf der Intensität (I) des Magnetfeldes bei einer Bewegung entlang des Schleifendrahtes (W) erzeugt.

7. Bodenbearbeitungsroboter-System gemäß einem der voranstehenden Patentansprüche, **dadurch gekennzeichnet, dass** mindestens ein Mittel (M) zur Veränderung der Intensität (I) des Magnetfeldes am Schleifendraht (W) eine im Schleifendraht (W) integrierte Luftspule mit einer Vielzahl von Windungen ist.

8. Bodenbearbeitungsroboter-System gemäß einem der voranstehenden Patentansprüche, **dadurch gekennzeichnet, dass** mindestens ein Mittel zur Veränderung der Intensität des Magnetfeldes am Schleifendraht (W) eine im Schleifendraht (W) integrierte Spule mit einer Vielzahl von Windungen und einem ferromagnetischen Kern ist.

9. Bodenbearbeitungsroboter-System gemäß einem der voranstehenden Patentansprüche, **dadurch gekennzeichnet, dass** mindestens ein Mittel (M) zur Veränderung der Intensität (I) des Magnetfeldes am Schleifendraht (W) eine in die Stromschleife eingebundene Kapazität ist.

10. Bodenbearbeitungsroboter-System gemäß einem der voranstehenden Patentansprüche, **dadurch gekennzeichnet, dass** mindestens ein Mittel (M) zur Veränderung der Intensität (I) des Magnetfeldes am Schleifendraht (W) eine Abschirmung des Schleifendrahtes (W) über eine Teilstrecke des Schleifendrahtes ist.

11. Verwendung des autonom fahrenden Bodenbearbeitungsroboters, insbesondere Mähroboter, in einem Bodenbearbeitungsroboter-System gemäß einem der Ansprüche 1 bis 10.

12. Verwendung der Flächenbegrenzungsvorrichtung in einem Bodenbearbeitungsroboter-System gemäß einem der Ansprüche 1 bis 10.

13. Verfahren zur Rückführung eines autonom fahrenden Bodenbearbeitungsroboters (R), dessen zu bearbeitende Fläche durch einen Schleifendraht (W) begrenzt und der unter Verwendung des Schleifendrahtes (W) und eines durch den Schleifendraht (W) erzeugten Magnetfeldes zu einer Basisstation (B) rückgeführt wird, **dadurch gekennzeichnet, dass** der Bodenbearbeitungsroboter (R) die Intensität (I) des Magnetfeldes am Schleifendraht (W) detektiert und aufgrund einer Erkennung eines vorgegebenen typischen Intensitätsverlaufes während der Bewegung entlang des Schleifendrahtes (W) eine vorgegebene Aktion auslöst, die bei der Bewegung des Bodenbearbeitungsroboters (R) entlang des Schleifendrahtes (W) zumindest eine Steuerungsaktion des Bodenbearbeitungsroboters (R) auslöst, mit welcher der Bodenbearbeitungsroboter (R) die Bewegung entlang des Schleifendrahtes (W) durch Steuerung in eine vorgegebene Richtung beendet.

14. Verfahren gemäß dem voranstehenden Patentanspruch 13, **dadurch gekennzeichnet, dass** zur Ausführung der mindestens eine Aktion zusätzlich zur Erkennung eines vorgegebenen typischen Intensitätsverlaufes eine während der Bewegung entlang des Schleifendrahtes (W) auch mindestens vorgegebene Betriebsbedingung vorliegen muss.

15. Verfahren gemäß einem der voranstehenden Patentansprüche 13 bis 14, **dadurch gekennzeichnet, dass** der vorgegebene Intensitätsverlauf zuvor erlernt wurde.

16. Verfahren gemäß einem der voranstehenden Patentansprüche 13 bis 15, **dadurch gekennzeichnet, dass** unterschiedliche Intensitätsverläufe unterschiedliche Aktionen auslösen.

## Claims

1. Ground maintenance robot system, in particular mowing robot system, having:
1.1. an area delimiting device with:
1.1.1. a current-conducting loop wire (W), which serves for delimiting an area (F) to be maintained and for returning a ground maintenance robot (R),
1.1.2. a base station (B) for supplying power, in particular also to the loop wire (W), wherein the loop wire (W) forms a magnetic field with an intensity (I) when there is a power supply,
1.1.3. wherein the loop wire (W) has at at least one position over its length at least one means (M) for locally changing the intensity of the magnetic field generated,
1.2. an autonomously driving ground maintenance robot (R) for maintaining the area (F) bounded by the loop wire (W), with:
1.2.1. means (D) for detecting the intensity of the magnetic field along the loop wire,
1.2.2. means for detecting a signal profile of a changing intensity (I) of the magnetic field when there is a movement along the loop wire (W),
1.2.3. a controller (P) of the ground maintenance robot (R), which is designed to initiate at least one predetermined activity on the basis of a positive detection of a predetermined signal profile of the intensity (I) of the magnetic field when there is a movement along the loop wire (W),
**characterized in that**
1.2.4. the predetermined activity in response to the movement along the loop wire (W) is at least one controlling action of the ground maintenance robot (R), by which the ground maintenance robot (R) ends the movement along the loop wire (W) by providing control in a predetermined direction.

2. Ground maintenance robot system according to the preceding claim, **characterized in that** the controller of the ground maintenance robot (R) is designed to initiate the predetermined activity only when a predetermined operating situation exists.

3. Ground maintenance robot system according to one of the preceding claims, **characterized in that** the controller (P) of the ground maintenance robot (R) is designed to perform in response to various detected signal profiles other activities in each case, assigned to each signal profile.

4. Ground maintenance robot system according to one of the preceding claims, **characterized in that** the ground maintenance robot (R) is designed to learn at least one signal profile of the intensity (I) of the magnetic field when there is a movement along the loop wire (W) that initiates a predetermined action and to store it in the system, preferably to store it together with a specific assigned action.

5. Ground maintenance robot system according to one of the preceding claims, **characterized in that** the loop wire (W) of the area delimiting device has distributed over its length multiple means (M) for changing the intensity of the magnetic field.

6. Ground maintenance robot system according to the preceding claim 5, **characterized in that** the means (M) for changing the intensity (I) of the magnetic field on the loop wire (W) are divided into at least two groups, and arranged on the loop wire (W) in such a way that each group produces a bijective signal profile of the intensity (I) of the magnetic field when there is a movement along the loop wire (W).

7. Ground maintenance robot system according to one of the preceding claims, **characterized in that** at least one means (M) for changing the intensity (I) of the magnetic field on the loop wire (W) is an air coil which is integrated in the loop wire (W) and has a multiplicity of turns.

8. Ground maintenance robot system according to one of the preceding claims, **characterized in that** at least one means for changing the intensity of the magnetic field on the loop wire (W) is a coil which is integrated in the loop wire (W) and has a multiplicity of turns and a ferromagnetic core.

9. Ground maintenance robot system according to one of the preceding claims, **characterized in that** at least one means (M) for changing the intensity (I) of the magnetic field on the loop wire (W) is a capacitor incorporated in the current loop.

10. Ground maintenance robot system according to one of the preceding claims, **characterized in that** at least one means (M) for changing the intensity (I) of the magnetic field on the loop wire (W) is a shield for the loop wire (W) over a section of the loop wire.

11. Use of the autonomously driving ground maintenance robot, in particular mowing robot, in a ground maintenance robot system according to one of the preceding claims 1 to 10.

12. Use of the area delimiting device in a ground maintenance robot system according to one of the preceding claims 1 to 10.

13. Method for returning an autonomously driving ground maintenance robot (R), the area that is to be maintained by the robot being delimited by the loop wire (W) and the robot being returned to a base station (B) by using the loop wire (W) and a magnetic field generated by the loop wire (W), **characterized in that** the ground maintenance robot (R) detects the intensity (I) of the magnetic field at the loop wire (W) and, on the basis of a detection of a predetermined typical intensity profile during the movement along the loop wire (W), initiates a predetermined action which, in response to the movement of the ground maintenance robot (R) along the loop wire (W), initiates at least one controlling action of the ground maintenance robot (R), by which the ground maintenance robot (R) ends the movement along the loop wire (W) by providing control in a predetermined direction.

14. Method according to the preceding claim 13, **characterized in that**, for performing the at least one action, in addition to the detection of a predetermined typical intensity profile, an operating condition which is at least also predetermined during the movement along the loop wire (W) must be satisfied.

15. Method according to one of the preceding claims 13 to 14, **characterized in that** the predetermined intensity profile has previously been learned.

16. Method according to one of the preceding claims 13 to 15, **characterized in that** different intensity profiles initiate different actions.

## Revendications

1. Système de robot de traitement du sol, en particulier système de robot de tonte, possédant :
1.1. un dispositif de délimitation de surface comprenant :
1.1.1. un fil en boucle (W) conducteur électrique qui sert à délimiter une surface à traiter (F) et à ramener un robot de traitement du sol (R),
1.1.2. une station de base (B) servant à l'alimentation électrique, en particulier également du fil en boucle (W), le fil en boucle (W) formant, lorsque l'alimentation électrique est présente, un champ magnétique avec une intensité (I),
1.1.3. le fil en boucle (W) possédant au moins un moyen (M) destiné à modifier localement l'intensité du champ magnétique généré à au moins une position de sa longueur,
1.2. un robot de traitement du sol (R) à déplacement autonome destiné à traiter la zone (F) délimitée par le fil en boucle (W), comprenant :
1.2.1. des moyens (d) servant à reconnaître l'intensité du champ magnétique le long du fil en boucle,
1.2.2. des moyens servant à reconnaître un tracé de signal d'une intensité (I) qui varie du champ magnétique lors d'un mouvement le long du fil en boucle (W),
1.2.3. une commande (P) du robot de traitement du sol (R), laquelle est configurée pour déclencher au moins une activité prédéfinie sur la base d'une reconnaissance positive d'un tracé de signal prédéfini de l'intensité (I) du champ magnétique lors d'un mouvement le long du fil en boucle (W),
**caractérisé en ce que**
1.2.4. l'activité prédéfinie lors du mouvement le long du fil en boucle (W) est au moins une action de commande du robot de traitement du sol (R) par laquelle le robot de traitement du sol (R) termine le mouvement le long du fil en boucle (W) par commande dans une direction prédéfinie.

2. Système de robot de traitement du sol selon la revendication précédente, **caractérisé en ce que** la commande du robot de traitement du sol (R) est configurée pour ne déclencher l'activité prédéfinie que lorsqu'une situation de fonctionnement prédéfinie est présente.

3. Système de robot de traitement du sol selon l'une des revendications précédentes, **caractérisé en ce que** la commande (P) du robot de traitement du sol (R) est configurée pour, sur différents tracés de signal reconnus, exécuter des activités respectivement différentes et associées à chaque tracé de signal.

4. Système de robot de traitement du sol selon l'une des revendications précédentes, **caractérisé en ce que** le robot de traitement du sol (R) est configuré pour apprendre, lors d'un mouvement le long du fil en boucle (W), au moins un tracé de signal de l'intensité (I) du champ magnétique qui initie une action prédéfinie, et le mémoriser dans le système, de préférence le mémoriser conjointement avec une action associée spécifique.

5. Système de robot de traitement du sol selon l'une des revendications précédentes, **caractérisé en ce que** le fil en boucle (W) du dispositif de délimitation de surface présente plusieurs moyens (M) répartis sur sa longueur destinés à modifier l'intensité du champ magnétique.

6. Système de robot de traitement du sol selon la revendication précédente 5, **caractérisé en ce que** les moyens (M) destinés à modifier l'intensité (I) du champ magnétique au niveau du fil en boucle (W) sont divisés en au moins deux groupes et disposés au niveau du fil en boucle (W) de telle sorte que chaque groupe génère un tracé de signal unique de l'intensité (I) du champ magnétique lors d'un mouvement le long du fil en boucle (W) .

7. Système de robot de traitement du sol selon l'une des revendications précédentes, **caractérisé en ce qu'**au moins un moyen (M) destiné à modifier l'intensité (I) du champ magnétique au niveau du fil en boucle (W) est une bobine sans fer intégrée dans le fil en boucle (W) comprenant une pluralité de spires.

8. Système de robot de traitement du sol selon l'une des revendications précédentes, **caractérisé en ce qu'**au moins un moyen destiné à modifier l'intensité du champ magnétique au niveau du fil en boucle (W) est une bobine intégrée dans le fil en boucle (W) comprenant d'une pluralité de spires et un noyau ferromagnétique.

9. Système de robot de traitement du sol selon l'une des revendications précédentes, **caractérisé en ce qu'**au moins un moyen (M) destiné à modifier l'intensité (I) du champ magnétique au niveau du fil en boucle (W) est une capacité incorporée dans la boucle de courant.

10. Système de robot de traitement du sol selon l'une des revendications précédentes, **caractérisé en ce qu'**au moins un moyen (M) destiné à modifier l'intensité (I) du champ magnétique au niveau du fil en boucle (W) est un blindage du fil en boucle (W) sur une section partielle du fil en boucle.

11. Utilisation du robot de traitement du sol à déplacement autonome, en particulier robot de tonte, dans un système de robot de traitement du sol selon l'une des revendications 1 à 10.

12. Utilisation du dispositif de délimitation de surface dans un système de robot de traitement du sol selon l'une des revendications 1 à 10.

13. Procédé destiné à ramener un robot de traitement du sol (R) à déplacement autonome, dont la surface à traiter est délimitée par un fil en boucle (W) et qui est ramené vers une station de base (B) en utilisant le fil en boucle (W) et un champ magnétique généré par le fil en boucle (W), **caractérisé en ce que** le robot de traitement du sol (R) détecte l'intensité (I) du champ magnétique au niveau du fil en boucle (W) et, sur la base de la reconnaissance d'un tracé d'intensité typique prédéfini pendant le mouvement le long du fil en boucle (W), déclenche une action prédéfinie qui, lors du mouvement du robot de traitement du sol (R) le long du fil en boucle (W), déclenche au moins une action de commande du robot de traitement du sol (R), par laquelle le robot de traitement du sol (R) termine le mouvement le long du fil en boucle (W) par commande dans une direction prédéfinie.

14. Procédé selon la revendication 13, **caractérisé en ce que**, pour exécuter l'au moins une action, en plus de la reconnaissance d'un tracé d'intensité typique prédéfini, il doit également exister au moins une condition de fonctionnement prédéfinie pendant le mouvement le long du fil en boucle (W).

15. Procédé selon l'une des revendications précédentes 13 à 14, **caractérisé en ce que** le tracé d'intensité prédéfini a été appris au préalable.

16. Procédé selon l'une des revendications précédentes 13 à 15, **caractérisé en ce que** des tracés d'intensité différents déclenchent des actions différentes.
